Europäisches Patentamt

European Patent Office

Office européen des brevets

(19)

(11) EP 0 962 639 A1

(12) DEMANDE DE BREVET EUROPEEN

(43) Date de publication:
08.12.1999 Bulletin 1999/49

(51) Int Cl.$^6$: F02D 41/02, F01N 3/08,
F01N 3/20

(21) Numéro de dépôt: 99401237.5

(22) Date de dépôt: 21.05.1999

(84) Etats contractants désignés:
AT BE CH CY DE DK ES FI FR GB GR IE IT LI LU
MC NL PT SE
Etats d'extension désignés:
AL LT LV MK RO SI

(30) Priorité: 03.06.1998 FR 9806961

(71) Demandeur: RENAULT
92109 Boulogne-Billancourt (FR)

(72) Inventeurs:
• Beurthey, Stephan
  91430 Vauhallan (FR)
• Leroux, Jean-Francois
  92500 Rueil Malmaison (FR)

(74) Mandataire: Fernandez, Francis Lionel et al
Renault,
Technocentre,
S.0267 - TCR AVA 0-56,
1 avenue du Golf
78288 Guyancourt (FR)

(54) Procédé et dispositif de commande de purge en oxydes de soufre d'un pot catalytique de traitement des gaz d'échappement d'un moteur à combustion interne

(57) Le pot (6) comprend des moyens d'adsorption d'oxydes de soufre (SOx) contenus dans les gaz d'échappment. On déclenche une purge du pot (6) en oxydes de soufre (SOx) par un accroissement de la richesse (Ri) d'un mélange air/carburant d'alimentation du moteur, à partir d'une richesse correspondant à un mélange pauvre ou stoechiométrique. Suivant l'invention, a) on évalue, à l'aide d'un modèle, une grandeur (SS;EFFSOX; SS/SSC) représentative de la quantité d'oxydes de soufre (SOx) stockée dans le pot (6), et b) on déclenche une purge du pot (6) quand ladite grandeur franchit un seuil prédéterminé, fonction de la température ($T_{cat}$) du pot (6).

Application à un véhicule automobile propulsé par un moteur à combustion interne.

## Description

La présente invention est relative à un procédé et un dispositif de commande de purge en oxydes de soufre d'un pot catalytique de traitement des gaz d'échappement d'un moteur à combustion interne, ce pot comprenant des moyens d'absorption d'oxydes de soufre contenus dans ces gaz. Plus particulièrement, l'invention est relative à un tel procédé suivant lequel on déclenche une purge du pot en oxydes de soufre par accroissement de la richesse d'un mélange air/carburant d'alimentation du moteur, à partir d'une richesse correspondant à un mélange pauvre ou stoechiométrique.

Pour réduire la pollution de l'atmosphère par les gaz d'échappement des moteurs à combustion interne, en particulier ceux qui assurent la propulsion de véhicules automobiles, on équipe couramment les lignes d'échappement de ces gaz d'un pot catalytique ayant pour fonction de transformer des espèces chimiques nocives en espèces moins nocives, voire inoffensives.

C'est ainsi que l'on connaît un pot catalytique dit "à trois voies" ou "trifonctionnel", du fait qu'il assure une triple fonction d'oxydation des hydrocarbures imbrûlés (HC), d'oxydation du monoxyde de carbone CO en CO2 et de réduction des oxydes d'azote (NOx) en azote gazeux. Le souci de réduire les émissions de gaz à effet de serre, tel que le gaz carbonique CO2, a provoqué de l'intérêt pour un moteur à combustion interne capable de fonctionner avec un mélange air/carburant dit "pauvre", c'est-à-dire dont la richesse en carburant est inférieure à celle d'un mélange stoechiométrique. Lorsqu'on utilise un pot catalytique trifonctionnel classique pour dépolluer les gaz d'échappement d'un tel moteur fonctionnant en mélange pauvre, on observe une très faible efficacité du pot dans la réduction des oxydes d'azote. Pour pallier cet inconvénient, on décrit dans la demande de brevet français n° 97 15775 déposée le 12 décembre 1997 par la demanderesse, d'utiliser un pot catalytique trifonctionnel comprenant des moyens d'adsorption des oxydes d'azote présents dans les gaz d'échappement, lorsque le mélange air/carburant provenant du moteur est pauvre. Pour éviter que cette adsorption ne provoque, à la longue, la saturation de la capacité d'adsorption du catalyseur, on commande la richesse du mélange air/carburant du moteur de manière à accroître périodiquement la richesse de ce mélange. Cette commutation provoque la désorption des oxydes d'azote adsorbés dans le pot puis leur réduction par les hydrocarbures imbrûlés (HC) et le monoxyde de carbone (CO) présents dans le pot du fait de l'accroissement de la richesse du mélange.

Les oxydes de soufre (SOx) présents dans les gaz d'échappement et provenant du soufre dissous dans le carburant alimentant le moteur sont adsorbés dans les même conditions que les oxydes d'azote par le pot catalytique, en réduisant ainsi la capacité d'adsorption des oxydes d'azote par le pot. Cependant les moyens à mettre en oeuvre pour désorber ou "destocker" les oxydes de soufre sont quelque peu différents de ceux nécessaires pour destocker les oxydes d'azote. Comme pour ces derniers, ils consistent à accroître périodiquement la richesse du mélange air/carburant, à partir d'une richesse correspondant à un mélange pauvre mais, pour être efficace, cette commutation doit être effectuée alors que la température du pot catalytique est élevée, de l'ordre de 650°C environ, par exemple.

Si l'on ne désorbe pas les oxydes de soufre SOx stockés dans le pot en mettant en oeuvre des moyens spécifiques pour augmenter simultanément la richesse du mélange et la température du catalyseur, la capacité d'adsorption du pot en oxydes d'azote diminue au cours du temps et finit, à la longue, par être négligeable puisque le soufre empoisonne le catalyseur du pot.

Pour purger le pot des oxydes de soufre stockés, le brevet européen n° 580 389 propose, lorsque la température du pot catalytique est élevée, de diminuer périodiquement ou continûment la concentration en oxygène des gaz d'échappement en augmentant la richesse du mélange air/carburant provenant du moteur, pour désorber les SOx stockés. Le procédé décrit ne prenant pas en compte de manière précise la masse d'oxydes de soufre stockée dans le pot pour déclencher une purge, il s'ensuit une surconsommation en carburant due à des accroissements de richesse du mélange air/carburant, pendant les purges, non précisément proportionnés à la quantité d'oxydes de soufre à désorber. En outre, on ne propose aucun moyen pour forcer une purge des oxydes de soufre lorsque la température du pot est trop basse et cela même lorsque le catalyseur est fortement empoisonné par les oxydes de soufre et qu'alors il ne traite plus correctement les oxydes d'azote contenus dans les gaz d'échappement.

La présente invention a pour but de fournir un procédé de commande de purge en oxydes de soufre d'un pot catalytique, qui ne présente pas les inconvénients mentionnés ci-dessus et qui, plus particulièrement, permet d'une part de limiter au minimum la surconsommation due aux purges et, d'autre part, de commander, si nécessaire, une purge même si la température alors atteinte par le pot est trop basse.

On atteint ces buts de l'invention, ainsi que d'autres qui apparaîtront à la lecture de la description qui va suivre, avec un procédé de commande de purge en oxydes de soufre d'un pot catalytique du type décrit en préambule de la présente description, ce procédé étant remarquable en ce que a) on évalue, à l'aide d'un modèle, une grandeur représentative de la quantité d'oxydes de soufre stockée dans le pot, et b) on déclenche une purge du pot quand ladite grandeur franchit un seuil prédéterminé, fonction de la température du pot.

En prenant ainsi en compte la quantité d'oxydes de soufre réellement adsorbée dans le pot pour déclencher et, comme on le verra plus loin, régler la durée d'une purge du pot en oxydes de soufre, on limite la surconsommation en carburant due à cette purge.

Suivant un premier mode de mise en oeuvre de l'invention, la grandeur représentative de la quantité d'oxydes de soufre stockée dans le pot est la masse de ces oxydes. En variante, cette grandeur pourrait être constituée par l'efficacité instantanée de stockage dans le pot des oxydes de soufre ou le taux de remplissage du pot en oxydes de soufre.

Pour évaluer la masse courante ($SS_i$) d'oxydes de soufre adsorbés, à un instant d'échantillonnage i, on utilise le modèle :

$$SS_{i+1} = SS_i + Q_{Sox} \cdot EFFSOX$$

où $Q_{Sox}$ est le débit d'oxydes de soufre dans l'échappement du moteur et EFFSOX est l'efficacité instantanée de stockage des oxydes de soufre dans le pot.

Suivant l'invention, on arrête la purge quand la masse SS d'oxydes de soufre restant dans le pot est inférieure à un seuil fonction de la température $T_{cat}$ du pot 6.

Suivant l'invention encore, lors d'une purge déclenchée à une température du pot inférieure à une température prédéterminée, on réchauffe le pot jusqu'à une température convenant à la purge, supérieure à ladite température prédéterminée.

En prévoyant, suivant l'invention, des moyens pour régler la température des gaz d'échappement, il devient possible de commander une purge devenue nécessaire, alors même que la température de gaz d'échappement est trop basse pour qu'une telle commande soit efficace, la commande en température des gaz d'échappement permettant de relever la température de ces gaz à la valeur élevée convenable.

Pour la mise en oeuvre du procédé suivant la présente invention, celle-ci fournit un dispositif comprenant a) des moyens pour évaluer, à l'aide d'un modèle, une grandeur représentative de la quantité d'oxydes de soufre adsorbée dans le pot catalytique et, b) des moyens pour commander une purge quand ladite grandeur franchit un seuil prédéterminé, fonction de la température du pot.

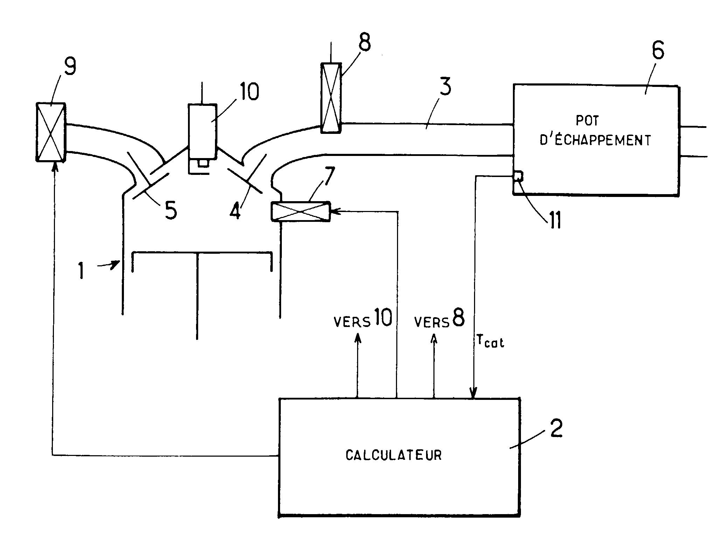

D'autres caractéristiques et avantages de la présente invention apparaîtront à la lecture de la description qui va suivre et à l'examen du dessin annexé dans lequel la figure unique représente schématiquement un dispositif permettant la mise en oeuvre du procédé selon la présente invention.

Plus particulièrement, on a schématisé un moteur à combustion interne 1 par l'une de ses chambres de combustion, le fonctionnement de ce moteur étant classiquement géré par un calculateur électronique numérique 2. La chambre de combustion est raccordée à une ligne d'échappement 3 à travers une soupape d'échappement 4, et à un collecteur d'admission d'air (non représenté) à travers une soupape d'admission 5. On trouve classiquement encore un pot catalytique 6 de traitement des gaz d'échappement dans la ligne 3, et une vanne de commande 9 du débit d'air entrant, telle qu'un papillon des gaz motorisé par exemple.

Le moteur comprend encore un injecteur de carburant 7 disposé de manière à pouvoir injecter du carburant directement dans la chambre de combustion, comme cela est bien connu pour les moteurs à combustion interne susceptibles de fonctionner en mélange pauvre, hétérogène et stratifié par exemple.

Le calculateur 2 commande le fonctionnement de l'injecteur 7 et de la vanne 9 pour régler la composition du mélange air/carburant d'alimentation du moteur, et le fonctionnement d'une bougie d'allumage 10 pour régler l'avance à l'allumage du mélange introduit dans la chambre de combustion. Le calculateur 2 peut commander encore un deuxième injecteur 8 de carburant 8 placé dans la ligne d'échappement 3, en aval de la soupape 4, pour un but que l'on décrira plus loin. Un capteur 11 délivre au calculateur 2 un signal représentatif de la température $T_{cat}$ du pot catalytique 6. D'autres capteurs (non représentés) délivrent au calculateur des signaux représentatifs d'autres grandeurs classiquement utilisées pour gérer le fonctionnement du moteur : régime N du moteur, pression d'admission d'air, etc., etc...

Le pot catalytique 6 équipant le dispositif décrit ci-dessus est naturellement du type comprenant des moyens d'adsorption d'oxydes d'azote et de soufre lorsque le moteur fonctionne en mélange air/carburant pauvre.

Outre ses fonctions habituelles de gestion du moteur, le calculateur 2 est dûment programmé pour :

- déterminer la valeur courante, à un instant d'échantillonnage i, de la masse d'oxydes de soufre adsorbés par le pot 6, à l'aide d'un modèle,
- décider le déclenchement et l'arrêt d'une purge en fonction de la masse d'oxydes de soufre stockés dans le pot et de la température du pot, ceci à l'aide d'un système expert,
- commander alors l'établissement de la richesse du mélange air/carburant à une valeur correspondant à un mélange stoechiométrique ou riche, lorsqu'une telle purge est déclenchée,
- commander éventuellement une élévation de la température des gaz d'échappement, comme on le verra plus loin.

On va décrire successivement la structure et le fonctionnement des moyens nécessaires à l'exécution de ces fonctions, à commencer par le système expert.

## Système expert

Suivant un mode de mise en oeuvre préféré du procédé selon l'invention, la grandeur surveillée pour décider de l'opportunité d'une purge du pot catalytique est la masse d'oxydes de soufre stockée dans le pot, telle qu'elle est estimée à l'aide d'un modèle. Une purge est déclenchée lorsque cette masse est supérieure à un seuil $S_1$ fonction de la température du catalyseur ($T_{cat}$). Ce seuil $S_1$ est contenu dans une table stockée dans la mémoire du calculateur 2.

Comme mentionné plus haut, la grandeur surveillée pour décider d'une purge pourrait aussi bien être constituée par le taux de remplissage du pot en oxydes de soufre, soit par le rapport entre la masse d'oxydes stockée et la masse d'oxydes stockable, ou encore par l'efficacité de stockage des oxydes de soufre, soit par le rapport du débit d'oxydes de soufre stocké au débit d'oxyde de soufre provenant des gaz d'échappement. Le déclenchement d'une purge pourrait être également soumis à d'autres conditions, relatives à la vitesse du véhicule, au rapport enclenché dans la boîte de vitesses, à la température du catalyseur, etc...

Suivant l'invention, pendant une purge, on évalue continûment la masse d'oxydes de soufre restant stockée dans le pot par l'intermédiaire d'un modèle de destockage des oxydes. On arrête la purge lorsque la masse d'oxydes restant dans le pot est inférieure à un seuil $S_2$ fonction de la température du pot. Le seuil $S_2$ est contenu dans une table stockée dans la mémoire du calculateur 2.

Pour économiser le carburant, on peut aussi arrêter la purge lorsque la durée de celle-ci dépasse une valeur prédéterminée, ou lorsque la température du catalyseur est redescendue en dessous d'un seuil prédéterminé. De même, suivant une variante optionnelle du procédé selon l'invention, on peut prévoir que le système expert n'autorise une nouvelle purge qu'à la condition que celle-ci soit séparée de la précédente par un intervalle de temps supérieur à un seuil $S_3$ prédéterminé.

On en vient maintenant aux modèles choisis pour décrire les fonctionnements du pot en stockage et en destockage, respectivement, des oxydes de soufre.

## Modèle du fonctionnement en stockage

On observe ce fonctionnement lorsque le moteur est alimenté en mélange pauvre. Le pot 6 adsorbe alors une partie des oxydes de soufre SOx formés dans le moteur et rejette dans la ligne d'échappement 3 l'autre partie de ces oxydes. Suivant la présente invention, on définit l'efficacité instantanée de stockage EFFSOX des oxydes de soufre comme suit :

$$EFFSOX = 1 - \frac{\text{débit de SOx à la sortie de la ligne d'échappement}}{\text{débit de SOX à la sortie du moteur 1}}$$

On définit aussi le taux de remplissage SS/SSC du pot 6 :

$$SS/SSC = \frac{\text{masse de SOx stockée (SS)}}{\text{masse maximum de SOx stockable (SSC)}}$$

Des mesures effectuées sur banc moteur permettent de relever les variations de EFFSOX et SSC en fonction de divers paramètres. EFFSOX est fonction de la température du cataluseur $T_{cat}$, du taux de remplissage SS/SSC et de la richesse Ri du mélange air/carburant injecté dans le moteur. EFFSOX est mis en mémoire dans le calculateur 2 sous la forme de deux tables appelées tbeffsox (dont les entrées sont $T_{cat}$ et SS/SSC) et tbeffri (dont l'entrée est Ri) :

$$EFFSOX = tbeffsox\ (T_{cat}, SS/SSC) \cdot tbeffri\ (Ri).$$

La masse maximum stockable de SOX est tirée d'une table tbssc dont les entrées sont $T_{cat}$ et Ri :

$$SSC = tbssc(T_{cat}, Ri)$$

Si $SS_i$ est la masse de SOx adsorbée à l'instant d'échantillonnage i, on a :

$$SS_{i+1} = SS_i + Q_{sox} \cdot EFFSOX,$$

où :

- $Q_{sox}$ est le débit de SOx dans les gaz d'échappement, défini par :

$$Q_{sox} = Ri \cdot Q_{mot} \cdot C_{sox},$$

où :

- $Q_{mot}$ est le débit de gaz à l'échappement qui est évalué par le calculateur 2 à partir du débit d'air entrant dans la chambre de combustion et de la quantité de carburant injectée dans cette chambre,
- $C_{sox}$ est une constante de mise à l'échelle.

Modèle de destockage des SOx

Le destockage intervient lorsque la richesse du mélange air/carburant du moteur est supérieure ou égale à 1. Des mesures sur banc moteur ont permis d'établir qu'alors la variation dSS/dt de la masse de SOx stockée par unité de temps (dSS/dt), est fonction de la température du catalyseur, du débit de gaz ($Q_{mot}$) et de la richesse Ri. dSS/dt est mis en mémoire dans le calculateur 2 sous la forme de deux tables tbss1 (dont les entrées sont $T_{cat}$ et Ri) et tbss2 (dont l'entrée est $Q_{mot}$). On a alors :

$$dSS/dt = tbss1 \, (T_{cat}, \, Ri) \cdot tbss1(Q_{mot})$$

Dans l'intervalle de temps $\Delta t$ qui sépare les instants d'échantillonnage i et (i + 1) la masse SS de SOx stockée dans le pot est décrémentée d'une valeur (dSS/dt)·$\Delta t$. Le modèle prend alors la forme :

$$SS_{i+1} = SS_i - (dSSdt) \cdot \Delta t$$

Moyens permettant de commander la richesse et la température des gaz d'échappement

Suivant l'invention, ces moyens de commande de la richesse du mélange air/carburant du moteur et de la température sont activés ensemble lorsque le système expert déclenche la purge des SOx stockés dans le pot 6 et que la température du pot 6 n'est pas suffisamment élevée pour assurer une purge efficace. Il convient alors de relever la température du pot, par exemple jusqu'au-dessus de 650°C environ. Suivant le niveau du couple demandé par le conducteur au moteur, les moyens mis en oeuvre pour ce faire sont différents.

Au-delà d'un seuil S4 de couple demandé par le conducteur, un mélange sensiblement homogène d'air et de carburant d'un rapport égal ou supérieur à la stoechiométrie est brûlé dans le moteur 1. Suivant l'invention, en retardant plus ou moins l'instant d'allumage du mélange dans la chambre de combustion du moteur, on peut contrôler la température des gaz d'échappement sortant du moteur et, par conséquent, la température du pot 6 dans lequel circulent ces gaz. Ce retard à l'allumage est cartographié dans la mémoire du calculateur en fonction du régime N du moteur 1 et du couple demandé par le conducteur, de sorte que l'on atteigne la température de pot qui permette la purge des SOx. Le couple demandé par le conducteur est alors ajusté par le calculateur 2 en réglant le débit d'air à l'aide de la vanne 9.

En dessous du seuil $S_4$ demandé par le conducteur, un premier mélange d'air et de carburant, d'un rapport inférieur à 1, est allumé par un premier allumage grâce à une bougie d'allumage 10 pour être brûlé dans la chambre de combustion. Ce premier mélange peut être indifféremment homogène ou hétérogène (mélange stratifié).

Suivant l'invention, pendant la phase de détente ou d'échappement de ces gaz brûlés, on injecte directement dans la chambre de combustion une masse d'essence M par l'injecteur 7. Le mélange formé par les gaz de combustion de la première combustion et la masse d'essence M s'oxyde en partie dans la chambre de combustion et cette oxydation se poursuit dans la ligne d'échappement 3. Néanmoins, si on injecte la masse d'essence M alors que la combustion du premier mélange n'est pas terminée, la masse d'essence M est complètement brûlée dans la chambre de combustion 1.

La masse d'essence M est déterminée par le calculateur 2 de sorte que la richesse du mélange air/carburant du mélange sortant de la chambre de combustion soit supérieure ou égale à la stoechiométrie. Ainsi, si la richesse du premier mélange air/carburant brûlé dans le moteur est R1 et la masse d'air admise dans la chambre $M_{air}$, la masse d'essence injectée dans la chambre de combustion pendant la phase de détente ou d'échappement est donnée par :

$$M = (R_{purge} - R1) \cdot M_{air}/K$$

où $R_{purge}$ est la richesse souhaitée pour purger les SOx du pot 6. Cette richesse est tirée d'une table stockée dans la mémoire du calculateur 2, en fonction du régime N et du couple moteur. K est un coefficient de mise à l'échelle.

La masse d'essence M apportant peu d'énergie mécanique au moteur mais une grande quantité de chaleur aux gaz d'échappement, le couple demandé par le conducteur est principalement formé par la première combustion. Ainsi, la masse de carburant formant le premier mélange provient de la demande de couple du conducteur. La masse d'air $M_{air}$ entrant dans le moteur par la vanne 9 est tabulée ou "cartographiée" en fonction du régime N et de la demande de couple du conducteur, de sorte que la post-oxydation ou la combustion de la masse d'essence M dans la ligne 3 apporte l'énergie nécessaire aux gaz d'échappement pour que la température du pot 6 convienne à la purge des SOx.

En variante, la masse d'essence M peut être injectée directement dans la ligne d'échappement 3 plutôt que dans la chambre de combustion, par l'injecteur 8. Dans ce cas, toute la masse d'essence M est oxydée dans cette ligne 3.

Suivant une autre variante, on allume le mélange air/carburant formé par la masse d'essence M et par les gaz venus de la combustion du premier mélange, en déclenchant un deuxième allumage grâce à la bougie d'allumage 10, de sorte que la totalité de la masse M soit brûlée dans la chambre de combustion.

## Revendications

1. Procédé de commande de purge en oxydes de soufre (SOx) d'un pot catalytique (6) de traitement des gaz d'échappement d'un moteur à combustion interne (1), ledit pot (6) comprenant des moyens d'adsorption d'oxydes de soufre (SOx) contenus dans ces gaz, suivant lequel on déclenche une purge du pot (6) en oxydes de soufre (SOx) par un accroissement de la richesse (Ri) d'un mélange air/carburant d'alimentation du moteur, à partir d'une richesse correspondant à un mélange pauvre ou stoechiométrique, caractérisé en ce que :

   a) on évalue, à l'aide d'un modèle, une grandeur (SS;EFFSOX;SS/SSC) représentative de la quantité d'oxydes de soufre (SOx) stockée dans le pot (6), et
   b) on déclenche une purge du pot (6) quand ladite grandeur franchit un seuil (Si) prédéterminé, fonction de la température ($T_{cat}$) du pot (6).

2. Procédé conforme à la revendication 1, caractérisé en ce que ladite grandeur est la masse (SS) d'oxydes de soufre stockée dans le pot (6).

3. Procédé conforme à la revendication 2, caractérisé en ce que, pour évaluer la masse courante ($SS_i$) d'oxydes de soufre adsorbés, à un instant d'échantillonnage i, on utilise le modèle :

$$SS_{i+1} = SS_i + Q_{sox} \cdot EFFSOX$$

   où $Q_{sox}$ est le débit d'oxydes de soufre dans l'échappement du moteur (1), EFFSOX est l'efficacité instantanée de stockage des oxydes de soufre dans le pot (6).

4. Procédé conforme à la revendication 3, caractérisé en ce qu'on tire l'efficacité EFFSOX de la relation :

$$EFFSOX = tbeffsox \cdot tbeffri$$

   où tbeffsox et tbeffri sont des valeurs tirées de tables dont les entrées sont la température ($T_{cat}$) et le taux de remplissage (SS/SSC) en oxydes de soufre du pot (6) pour tbeffsox , la richesse (Ri) du mélange air/carburant pour tbeffri.

5. Procédé conforme à la revendication 4, caractérisé en ce que la valeur (SSC) de la quantité maximale d'oxydes de soufre stockable dans le pot, qui intervient dans le taux de remplissage (SS/SSC) du pot en oxydes de soufre, est tirée d'une table (tbssc) dont les entrées sont la température du catalyseur ($T_{cat}$) et la richesse (Ri) du mélange air/carburant.

**6.** Procédé conforme à l'une quelconque des revendications 1 à 5, caractérisé en ce que, lors d'une purge du pot (6), on évalue la valeur courante ($SS_i$) de la quantité d'oxydes de soufre restant stockés dans le pot (6) à l'aide de la relation :

$$SS_{i+1} = SS_i - (dSS/dt) \cdot \Delta t$$

où $\Delta t$ est l'intervalle de temps séparant les instants d'échantillonnage i et (i + 1), dSS/dt = tbss1·tbss2, tbss1 étant tiré d'une table dont les entrées sont la température du pot ($T_{cat}$) et la richesse (Ri) du mélange air/carburant, tbss2 étant tiré d'une table dont l'entrée est le débit des gaz d'échappement ($Q_{mot}$).

**7.** Procédé conforme à la revendication 6, caractérisé en qu'on arrête la purge quand la masse (SS) d'oxydes de soufre restant dans le pot est inférieure à un seuil ($S_2$) fonction de la température ($T_{cat}$) du pot (6).

**8.** Procédé conforme à l'une quelconque des revendication 6 et 7, caractérisé en ce qu'on arrête la purge lorsque la durée de celle-ci dépasse une valeur prédéterminée ou lorsque la température ($T_{cat}$) du pot (6) descend en dessous d'un seuil prédéterminé.

**9.** Procédé conforme à la revendication 1, caractérisé en ce que ladite grandeur représentative de la quantité d'oxydes de soufre stockée dans le pot est choisie dans le groupe formé par : l'efficacité instantanée de stockage des oxydes de soufre (EFFSOX), le taux de remplissage (SS/SSC) du pot (6) en oxydes de soufre.

**10.** Procédé conforme à l'une quelconque des revendication 6 à 9, caractérisé en ce qu'on autorise une nouvelle purge à la condition que celle-ci soit séparée de la précédente par un intervalle de temps supérieur à un seuil ($S_3$) prédéterminé.

**11.** Procédé conforme à l'une quelconque des revendication 6 à 10, caractérisé en ce que, lors d'une purge déclenchée à une température ($T_{cat}$) du pot (6) inférieure à une température prédéterminée, on réchauffe le pot jusqu'à une température convenant à ladite purge, supérieure à ladite température prédéterminée.

**12.** Procédé conforme à la revendication 11, caractérisé en ce que, lors d'une purge, on compare le couple moteur demandé au moteur à un seuil (S4) prédéterminé et, si le couple est supérieur audit seuil ($S_4$), on règle la température des gaz d'échappement en retardant l'allumage du mélange air/carburant dans une chambre de combustion du moteur (1) de manière à porter la température des gaz d'échappement à une valeur convenant à ladite purge.

**13.** Procédé conforme à la revendication 12, caractérisé en ce que ledit retard à l'allumage est tiré d'une table dont les entrées sont le régime (N) du moteur (1) et le couple demandé.

**14.** Procédé conforme à l'une quelconque des revendications 11 à 13, caractérisé en ce que, lors d'une purge, on compare le couple demandé au moteur à un seuil (S4) prédéterminé, et si le couple est inférieur audit seuil ($S_4$), on règle la température des gaz d'échappement par injection d'une masse (M) prédéterminée de carburant, pendant une phase de détente des gaz brûlés dans le moteur (1), de manière que ladite masse d'essence subisse une combustion propre à élever la température des gaz d'échappement à une valeur convenant à ladite purge.

**15.** Procédé conforme à la revendication 14, caractérisé en ce qu'on règle la masse d'air ($M_{air}$) entrant dans le moteur (1) pour brûler ladite masse (M) de carburant, et la richesse ($R_{purge}$) du mélange air/carburant convenant à la purge à l'aide de la relation :

$$M = (R_{purge} - R_1) \cdot M_{air}/K$$

où R1 est la richesse du mélange ayant produit lesdits gaz en phase de détente.

**16.** Procédé conforme à la revendication 14 ou 15, caractérisé en ce qu'on injecte ladite masse de carburant (M) directement dans une chambre de combustion du moteur.

**17.** Procédé conforme à la revendication 15, caractérisé en ce qu'on injecte ladite masse de carburant (M) dans la ligne d'échappement (3), où cette masse s'oxyde.

**18.** Procédé conforme à la revendication 16, caractérisé en ce qu'on allume le mélange air/carburant formé par la masse d'essence (M) et les gaz en phase de détente en activant une bougie d'allumage (10) présente dans ladite chambre de combustion.

**19.** Dispositif pour la mise en oeuvre du procédé conforme à l'une quelconque des revendications 1 à 18, caractérisé en ce qu'il comprend a) des moyens (2) pour évaluer, à l'aide d'un modèle, une grandeur (SS;EFFSOX;SS/SSC) représentative de la quantité d'oxydes de soufre (SOx) adsorbée dans le pot catalytique (6) et, b) des moyens (7) pour commander une purge quand ladite grandeur franchit un seuil (Si) prédéterminé, fonction de la température ($T_{cat}$) du pot (6).

**20.** Dispositif conforme à la revendication 19, caractérisé en ce qu'il comprend des moyens (7;8;10) pour réchauffer le pot (6) à une température prédéterminée quant lesdits moyens de commande (7) déclenchent une purge, à partir d'une température du pot (6) inférieure à ladite température prédéterminée.

**21.** Dispositif conforme à la revendication 20, caractérisé en ce que lesdits moyens de réchauffement sont constitués par des moyens pour retarder l'allumage du mélange air/carburant dans une chambre de combustion du moteur (1).

**22.** Dispositif conforme à la revendication 20, caractérisé en ce que lesdits moyens de réchauffement sont constitués par des moyens (7) pour injecter une masse d'essence (M) supplémentaire dans une masse de gaz brûlés contenus dans une chambre de combustion du moteur (1).

**23.** Dispositif conforme à la revendication 20, caractérisé en ce que lesdits moyens de réchauffement sont constitués par des moyens (8) pour injecter une masse d'essence (M) supplémentaire dans la ligne d'échappement (3) du moteur (1).

POT
D'ÉCHAPPEMENT

VERS 10    VERS 8    $T_{cat}$

CALCULATEUR

Office européen
des brevets

# RAPPORT DE RECHERCHE EUROPEENNE

Numéro de la demande

EP 99 40 1237

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PATENT ABSTRACTS OF JAPAN vol. 095, no. 011, 26 décembre 1995 (1995-12-26) & JP 07 217474 A (TOYOTA MOTOR CORP), 15 août 1995 (1995-08-15) | 1,2,19 | F02D41/02 F01N3/08 F01N3/20 |
| Y | * abrégé * | 20,22,23 | |
| Y | PATENT ABSTRACTS OF JAPAN vol. 016, no. 455 (C-0987), 22 septembre 1992 (1992-09-22) & JP 04 161251 A (MITSUBISHI HEAVY IND LTD), 4 juin 1992 (1992-06-04) | 20 | |
| A | * abrégé * | 6,11 | |
| Y | DATABASE WPI Section Ch, Week 9715 Derwent Publications Ltd., London, GB; Class E36, AN 97-162862 XP002094561 & JP 09 032619 A (MITSUBISHI MOTOR CORP), 4 février 1997 (1997-02-04) | 20,22 | |
| A | * abrégé * | 1,6,11, 14,16,18 | DOMAINES TECHNIQUES RECHERCHES (Int.Cl.6) F01N F02D |
| Y | EP 0 761 286 A (TOYOTA MOTOR CO LTD) 12 mars 1997 (1997-03-12) * abrégé; figures * | 20,23 | |
| D,A | EP 0 580 389 A (TOYOTA MOTOR CO LTD) 26 janvier 1994 (1994-01-26) * colonne 5, ligne 26 - ligne 43; figures * | 1,19 | |
| A | US 5 743 084 A (HEPBURN JEFFREY SCOTT) 28 avril 1998 (1998-04-28) * colonne 6, ligne 21 - ligne 67; figures * | 1,19 | |

-/--

Le présent rapport a été établi pour toutes les revendications

| Lieu de la recherche | Date d'achèvement de la recherche | Examinateur |
|---|---|---|
| LA HAYE | 10 septembre 1999 | Sideris, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen
des brevets

**RAPPORT DE RECHERCHE EUROPEENNE**

Numéro de la demande

EP 99 40 1237

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN<br>vol. 018, no. 310 (M-1620),<br>14 juin 1994 (1994-06-14)<br>& JP 06 066129 A (TOYOTA MOTOR CORP),<br>8 mars 1994 (1994-03-08)<br>* abrégé * | 1,2,19,<br>20 | |
| A | QUISSEK F ET AL: "EINFLUSS DES SCHWEFELGEHALTS IM KRAFTSTOFF AUF DAS ABGASEMISSIONSVERHALTEN VON PKW THE INFLUENCE OF FUEL SULPHUR CONTENT ON THE EMISSIONS CHARACTERISTICS OF PASSENGER CARS"<br>FORTSCHRITT-BERICHTE VDI. REIHE 12, VERKEHRSTECHNIK / FAHRZEUGTECHNIK,<br>vol. 2, no. 348, 7 mai 1998 (1998-05-07),<br>pages 225-246, XP000750080 | | |
| A | PATENT ABSTRACTS OF JAPAN<br>vol. 098, no. 006,<br>30 avril 1998 (1998-04-30)<br>& JP 10 054274 A (TOYOTA MOTOR CORP),<br>24 février 1998 (1998-02-24)<br>* abrégé * | | DOMAINES TECHNIQUES RECHERCHES (Int.Cl.6) |

Le présent rapport a été établi pour toutes les revendications

| Lieu de la recherche | Date d'achèvement de la recherche | Examinateur |
|---|---|---|
| LA HAYE | 10 septembre 1999 | Sideris, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 99 40 1237

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

10-09-1999

| Document brevet cité au rapport de recherche | Date de publication | Membre(s) de la famille de brevet(s) | Date de publication |
|---|---|---|---|
| JP 07217474 A | 15-08-1995 | AUCUN | |
| JP 04161251 A | 04-06-1992 | AUCUN | |
| JP 9032619 A | 04-02-1997 | AUCUN | |
| EP 0761286 A | 12-03-1997 | JP 9137713 A<br>US 5850735 A | 27-05-1997<br>22-12-1998 |
| EP 0580389 A | 26-01-1994 | JP 2605586 B<br>JP 6088518 A<br>DE 69300512 D<br>DE 69300512 T<br>US 5402641 A | 30-04-1997<br>29-03-1994<br>26-10-1995<br>14-03-1996<br>04-04-1994 |
| US 5743084 A | 28-04-1998 | DE 19744738 A<br>GB 2318417 A<br>JP 10121944 A | 30-04-1998<br>22-04-1998<br>12-05-1998 |
| JP 06066129 A | 08-03-1994 | JP 2745985 B | 28-04-1998 |
| JP 10054274 A | 24-02-1998 | AUCUN | |

EPO FORM P0460